# FASCICULE DE BREVET EUROPEEN

(11) **EP 2 279 430 B1**
(45) Date de publication et mention de la délivrance du brevet: **22.08.2018**
(21) Numéro de dépôt: 09745981.2
(22) Date de dépôt: 22.04.2009
(51) Int. Cl.: G01S 1/80, G01S 5/24, G01S 5/26, G01S 5/28, G01V 1/38, G01S 15/74, G01S 5/30

(54) **SYSTEME DE POSITIONNEMENT ACOUSTIQUE SOUS-MARIN**
AKUSTISCHES UNTERWASSERPOSITIONIERUNGSSYSTEM
UNDERWATER ACOUSTIC POSITIONING SYSTEM

(30) Priorité: 24.04.2008 FR 0852772
(43) Date de publication de la demande: 02.02.2011
(73) Titulaire: IXBLUE, 78100 Saint-Germain-en-Laye (FR)
(72) Inventeur: NAPOLITANO, Fabien, F-78750 Mareil Marly (FR); CRETOLLIER, François, F-06520 Magagnosc (FR)
(74) Mandataire: Jacobacci Coralis Harle
(86) Numéro de dépôt international: PCT/FR2009/050749
(87) Numéro de publication internationale: WO 2009/138662

(56) Documents cités:
- FR-A- 2 519 424
- FR-A- 2 627 595
- FR-A- 2 722 883
- US-A- 4 070 671

## Description

Le domaine de la présente invention est le positionnement sous-marin. Plus particulièrement l'invention concerne un système permettant notamment le positionnement précis en temps réel d'un grand nombre d'appareils sous-marin ou de surface simultanément, et/ou ne nécessitant le déploiement que d'un nombre réduit de stations de bases de référence, et/ou permettant une discrétion acoustique de l'appareil à positionner.

Il est connu d'utiliser des ondes acoustiques pour positionner un appareil sous la mer. Ainsi, dans un système de type LBL (pour « Long Base Line »), un émetteur/récepteur acoustique embarqué à bord de l'appareil sous-marin à positionner interroge plusieurs balises (au moins trois) distantes et indépendantes dont les positions sur le fond sous-marin sont connues. Chacune des balises répond au signal acoustique d'interrogation par un signal acoustique de réponse. Le calculateur de l'émetteur/récepteur acoustique embarqué à bord de l'appareil sous-marin à positionner calcule à partir des signaux reçus les temps de trajets des ondes acoustique entre lui même et chacune des balises de fond. A partir de ces temps de trajets et de la connaissance de la vitesse du son dans l'eau, le calculateur calcule les distances entre chacune des balises de fond et l'appareil sous-marin à positionner. Puis par triangulation, à partir de ces distances et des positions connues des balises de fond, le calculateur calcule la position de l'appareil sous-marin à positionner.

Dans un système du type LBL actif, plusieurs balises (au moins trois) distantes et indépendantes dont les positions sur le fond sous-marin sont connues émettent régulièrement, et à des temps connus grâce à la présence d'horloges synchronisées dans chacun des émetteurs, des signaux acoustiques. Ces signaux acoustiques sont reçus par un récepteur acoustique embarqué à bord de l'appareil sous-marin à positionner, lui même muni d'une horloge synchronisée avec les horloges des balises de fond. Le calculateur du récepteur acoustique embarqué à bord de l'appareil sous-marin à positionner calcule à partir des signaux reçus et des données de l'horloge embarquée, les temps de trajets des ondes acoustique entre lui même et chacune des balises de fond. A partir de ces temps de trajets et de la connaissance de la vitesse du son dans l'eau, le calculateur calcule les distances entre chacune des balises de fond et l'appareil sous-marin à positionner. Puis par triangulation, à partir de ces distances et des positions connues des balises de fond, le calculateur calcule la position de l'appareil sous-marin à positionner.

Dans un système du type USBL (pour « Ultra Short Base Line »), un système embarqué à bord d'un navire de surface et comportant un émetteur acoustique et au moins deux, généralement plus de quatre, récepteurs acoustiques liés mécaniquement interroge un émetteur/récepteur acoustique embarqué à bord de l'appareil sous-marin à positionner. L'émetteur/récepteur acoustique répond par un signal acoustique de réponse. Le signal acoustique de réponse est reçu sur chacun des récepteurs du système embarqué à bord du navire de surface. Le calculateur du système embarqué à bord du navire de surface estime à partir des signaux reçus sur chacun des récepteurs le temps de trajet de l'onde acoustique entre l'émetteur/récepteur acoustique embarqué à bord de l'appareil sous-marin à positionner et le système embarqué. A partir de ce temps de trajet et de la connaissance de la vitesse du son dans l'eau, le calculateur calcule la distance entre l'appareil sous-marin à positionner et le système embarqué à bord du navire de surface. Le calculateur du système embarqué à bord du navire de surface calcule, à partir des signaux reçus sur chacun des récepteurs, les différences précises de phases de l'onde acoustique entre l'émetteur/récepteur acoustique embarqué à bord de l'appareil sous-marin à positionner et chacun des récepteurs du système embarqués les uns par rapport aux autres. A partir de ces différences de phases et des temps de trajet calculés précédemment, le calculateur calcule les différences précises de temps de trajet de l'onde acoustique entre l'émetteur/récepteur acoustique embarqué à bord de l'appareil sous-marin à positionner et chacun des récepteurs du système embarqués les uns par rapport aux autres. A partir de ces différences précises de temps de trajet, le calculateur calcule la direction relative entre l'appareil sous-marin à positionner et l'antenne constituée des récepteurs embarqués à bord du navire de surface. A partir de la connaissance de la position et de l'orientation du navire de surface, de la distance et de la direction relative entre l'appareil sous-marin à positionner et le système embarqué à bord du navire de surface, le calculateur calcule la position de l'appareil sous-marin à positionner.

Dans un système du type USBL inversé, un système embarqué à bord de l'appareil sous-marin à positionner et comportant un émetteur acoustique et au moins deux, généralement plus de quatre, récepteurs acoustiques liés mécaniquement interroge un émetteur/récepteur acoustique dont la position est connue. L'émetteur/récepteur acoustique répond par un signal acoustique de réponse. Le signal acoustique de réponse est reçu sur chacun des récepteurs du système embarqué à bord de l'appareil sous-marin à positionner. Le calculateur du système embarqué à bord de l'appareil sous-marin à positionner estime à partir des signaux reçu sur chacun des récepteurs le temps de trajet de l'onde acoustique entre l'émetteur/récepteur acoustique et le système embarqué à bord de l'appareil sous-marin à positionner. A partir de ce temps de trajet et de la connaissance de la vitesse du son dans l'eau, le calculateur calcule la distance entre l'appareil sous-marin à positionner et l'émetteur/récepteur acoustique. Le calculateur du système embarqué à bord de l'appareil sous-marin à positionner calcule, à partir des signaux reçus sur chacun des récepteurs, les différences précises de phases de l'onde acoustique entre l'émetteur/récepteur acoustique embarqué à bord de l'appareil sous-marin à positionner et chacun des récepteurs du système embarqués les uns par rapport aux autres. A partir de ces différences de phases et des temps de trajet calculés précédemment, le calculateur calcule les différences précises de temps de trajet de l'onde acoustique entre l'émetteur/récepteur acoustique embarqué à bord de l'appareil sous-marin à positionner et chacun des récepteurs du système embarqués les uns par rapport aux autres. A partir de ces différences précises de temps de trajet, le calculateur calcule la direction relative entre l'antenne constituée des quatre récepteurs embarqués sur l'appareil sous-marin à positionner et l'émetteur/récepteur acoustique. A partir de la connaissance de la position de l'émetteur/récepteur acoustique, de l'orientation dans l'espace de l'appareil sous-marin à positionner, de la distance et de la direction relative entre l'appareil sous-marin à positionner et l'émetteur/récepteur acoustique, le calculateur calcule la position de l'appareil sous-marin à positionner.

Les systèmes USBL, USBL inversé et LBL sont limités en ce qu'ils ne permettent de positionner qu'un nombre limité d'appareils sous-marins simultanément sur une même zone. En effet, il est nécessaire, afin d'éviter les interférences entre les ondes acoustiques émises par les émetteurs/récepteurs embarqués à bord des appareils sous-marin à positionner, de partager entre les différents émetteurs/récepteurs la bande de fréquence utilisable. Les bandes de fréquence utilisables en acoustique sous-marine sont extrêmement limitées du fait de l'atténuation très rapide des hautes fréquences acoustiques lors de la propagation dans l'eau ce qui conduit à limiter le nombre d'émetteur/récepteur pouvant fonctionner de façon simultanée et donc le nombre d'appareils sous-marins pouvant être positionnés simultanément. Or, dans le cas par exemple du déploiement et de l'exploitation d'un gisement pétrolier sous-marin, le nombre d'appareils sous-marins dont il est nécessaire de connaître en permanence la position peut être très important et donc excéder largement les capacités des systèmes LBL et USBL.

Les systèmes USBL, USBL inversé et LBL ne permettent pas de positionner un appareil sous-marin dont la présence ne doit pas pouvoir être détectée par d'autres appareils acoustiques. En effet, l'utilisation de ces systèmes implique que l'appareil sous-marin émette un signal acoustique. Ce signal peut être reçu par d'autres appareils acoustiques ce qui conduit à la détection de l'appareil sous-marin. L'impossibilité de cacher la présence de l'appareil sous-marin à positionner peut constituer un désavantage rédhibitoire des systèmes USBL et LBL dans le cas, par exemple, d'applications militaires lors d'un déploiement dans une zone hostile.

Les systèmes USBL, USBL inversé et LBL nécessitent de fournir une quantité importante d'énergie à l'émetteur acoustique embarqué sur chacun des appareils à positionner afin de permettre à cet émetteur d'émettre une puissance acoustique suffisante. Ces systèmes ne permettent donc pas d'utiliser des systèmes basse consommation sur les appareils à positionner.

Les systèmes LBL et les systèmes LBL actifs nécessitent l'installation et le positionnement précis de plusieurs balises acoustique sur le fond marin. Le temps de déploiement de ces systèmes est donc long et coûteux.

Les systèmes USBL et USBL inversé nécessitent d'utiliser un moyen de référencement angulaire absolu afin de connaître l'orientation de l'antenne de réception précisément. Les systèmes de référencement angulaire absolu ayant les performances suffisantes, par exemple des systèmes à base de composants inertiels haute performance, sont chers et augmentent donc significativement le coût des systèmes USBL et USBL inversés.

Les systèmes USBL et USBL inversés nécessitent l'emploi d'une antenne acoustique qui est soit une antenne en trois dimensions donc volumineuse et qui offre une résistance hydrodynamique élevée, soit une antenne plane qui rend l'antenne acoustique directionnelle.

Les systèmes LBL, LBL actif, USBL et USBL inversés ont des performances en précision de positionnement qui dépendent grandement du profil de célérité dans la colonne d'eau, et qui par ailleurs obligent à acquérir régulièrement le profil de célérité, lequel peut changer souvent dans une même journée dans les couches d'eau superficielles.

Il est connu du brevet FR 2 519 424 un dispositif de télémesure acoustique pour la détermination de la position relative d'un objet immergé par rapport à un navire. Ce dispositif comprend trois émetteurs acoustiques fixés sur un navire de surface et un récepteur acoustique fixé sur un objet immergé.

Il est connu des systèmes couplés utilisant des sous-systèmes et des algorithmes de fusion de données permettant d'utiliser des informations partielles de position et/ou de vitesse et/ou de d'accélération issues de chacun des sous-système, et d'en déduire grâce à l'algorithme de fusion de données une information de position plus précise.

Par exemple, il est connu les systèmes de positionnement utilisant des filtres de Kalman comme algorithme de fusion de données, comme dans les centrales inertielles ou utilisé conjointement avec un capteur de vitesse et un gyrocompas, ce filtre de Kalman pouvant recaler totalement ou partiellement le système de positionnement par prise en compte d'une information de position ou d'une information de distance par rapport à un point donné, cette information étant fournie par un sous-système.

Une partie des limitations du système couplé vont être celles du sous-système acoustique du système couplé, comme par exemple les limitations déjà mentionnées ci-dessus.

Il est connu des systèmes radio-goniométriques comme le VOR, utilisés pour la navigation en aéronautique, et qui utilisent les ondes électromagnétiques émises par une antenne tournante qui émet un signal avec deux porteuses dont la phase est décalée selon la direction de pointage de l'antenne par rapport au nord géographique, un récepteur sur la plate-forme aérienne mesurant la phase entre ces deux porteuses du signal électromagnétique, permettant donc de connaître l'angle entre le Nord magnétique, la balise et l'avion - cette antenne tournante pouvant être remplacée de façon équivalente par un ensemble de 48 antennes d'émission réparties autour d'un cercle et commutées de façon synchrone.

Il est connu le système de radionavigation LORAN, utilisé en aéronautique, qui mesure une différence de temps entre des signaux électromagnétiques émis par deux stations sol synchronisées - au moins trois stations étant utilisées deux à deux pour calculer une position.

Il est connu le système de radionavigation DECCA, système anciennement utilisé en aéronautique, et qui utilisait le déphasage entre deux signaux électromagnétiques continus sous forme de sinusoïdes, émises par deux stations sol - au moins trois stations étant utilisées deux à deux pour calculer une position.

De tels systèmes utilisés en aéronautique utilisent des ondes électromagnétiques qui sont donc inutilisables en milieu marin pour du positionnement du fait de la très forte atténuation des ondes électromagnétiques dans l'eau de mer pour les gammes de fréquences où la taille des antennes reste raisonnable. Par ailleurs, l'utilisation d'un système immergé ayant des antennes mobiles en rotation ou comportant un grand nombre d'antennes n'est pas acceptable pour des raisons de complexité et de coût. Par ailleurs, l'utilisation de signaux continus dans un système immergé est inacceptable pour des raisons de consommation d'énergie.

Il existe donc un besoin pour un système permettant le positionnement en temps réel, simultané et fiable d'un très grand nombre d'appareils sous-marins ou de surface. Il existe également un besoin pour un système de positionnement ne permettant pas la détection acoustique des appareils sous-marins à positionner. Il existe également un besoin pour un système à faible consommation d'énergie sur les appareils à positionner. Il y a également besoin d'un système de positionnement dont le temps de déploiement soit court. Il y a également besoin d'un système dont le coût soit réduit. Il y a également besoin d'un système qui utilise des signaux acoustiques. Il y a également besoin d'un système de positionnement omnidirectionnel et qui ne soit pas un frein hydrodynamique. Il y a besoin d'un système dont les performances soient indépendantes des variations de la célérité du son dans la colonne d'eau.

L'invention a donc pour objectif de résoudre les problèmes mentionnés ci-dessus.

Pour cela l'invention a pour objet un système de positionnement d'au moins un appareil sous-marin, selon la revendication 1. Selon un mode de réalisation de l'invention, la station de base ne comporte que deux émetteurs, et le lieu géométrique possible de la position relative de l'appareil par rapport à la station de base est, à l'incertitude près, un hyperboloïde dont l'axe est la droite contenant les deux émetteurs.

Selon un autre mode de réalisation de l'invention, la station de base comporte trois émetteurs disposés géométriquement de façon non co-linéaire, et le lieu géométrique possible de la position relative de l'appareil par rapport à la station de base est, à l'incertitude près, l'intersection de deux hyperboloïdes qui est considérée, à grande distance relative, comme étant deux demi-droites.

Selon un autre mode de réalisation de l'invention, la station de base comporte quatre émetteurs dont les positions ne sont pas contenues par un même plan, et le lieu géométrique possible de la position relative de l'appareil par rapport à la station de base est, à l'incertitude près, l'intersection de trois hyperboloïdes qui peut, à faible distance relative, être approximée par un point ou, à grande distance, par une demi-droite.

Selon un mode de réalisation de l'invention, le système comporte des moyens pour acquérir la distance séparant l'appareil de la station de base et permettant de localiser la position relative du système par rapport à cette station de base sur une sphère.

Selon un mode de réalisation particulier de l'invention, la position et l'orientation absolues de l'antenne de la station de base sont connues ou estimées par tout moyen connu.

Selon un mode de réalisation particulier de l'invention, lesdits moyens pour acquérir la distance séparant l'appareil de la station de base comportent un émetteur acoustique, la station de base comporte un récepteur acoustique adapté audit émetteur, et l'émission de la station de base est déclenchée par une commande acoustique comportant un ordre d'interrogation envoyé par l'appareil.

Selon un mode de réalisation de l'invention, l'appareil et la station de base comportent chacun une horloge, lesdites horloges étant synchronisées entre elles et permettant la mesure du temps de trajet du signal acoustique entre la station de base et l'appareil.

Selon un autre mode de réalisation particulier de l'invention, les horloges sont resynchronisables par l'émission d'un signal d'interrogation émis par l'appareil sous-marin.

Selon un mode de réalisation particulier de l'invention, le déplacement relatif de l'appareil par rapport à la station de base entre la réception de deux ensembles de signaux acoustiques est connu ou mesuré, et le calculateur détermine la position de l'appareil en comparant ce déplacement aux couples de lieux géométriques possibles définis à la réception de ces deux ensembles de signaux acoustiques. Le premier ensemble de signaux comprend les signaux acoustiques reçus avant le déplacement, et le second ensemble de signaux comprend les signaux acoustiques reçus après le déplacement.

Selon un mode de réalisation de l'invention, le calculateur comporte des moyens pour tenir compte de la célérité ou du profil de célérité du son dans le milieu marin.

### Brève description des dessins

L'invention sera mieux comprise et d'autres buts, détails, caractéristiques et avantages de celle-ci apparaîtront plus clairement au cours de la description des modes de réalisation de l'invention donnés uniquement à titre illustratif et non limitatif en référence aux dessins annexés.

Sur ces dessins :
La figure 1 représente un système de positionnement selon l'invention comprenant une station de base à quatre émetteurs acoustiques et un appareil sous-marin à positionner comprenant un récepteur acoustique ;
La figure gure 2 représente le lieu géométrique possible (une demi-droite) de la position de l'appareil, déterminé par le système de positionnement de la figure 1 ;
La figure 3 représente un système de positionnement comprenant une station de base à quatre émetteurs et un appareil à positionner comprenant un émetteur apte à interroger la station de base ;
La figure 4 représente le lieu géométrique possible (indiqué par un point) de la position de l'appareil déterminé par un système de positionnement de la figure 1 à 3, dans lequel la distance de l'appareil à la station de base est connue ou mesurée ;
La figure 5 représente un système de positionnement, comprenant deux stations de base multi-émetteurs non synchronisées entre elles et un appareil à positionner situé dans la portée des deux stations de bases ;
La figure 6 représente le lieu géométrique possible (indiqué par un point) de la position de l'appareil déterminé par le système de positionnement de la figure 5 ;
La figure 7 représente la surface de couverture d'un système de positionnement classique de type LBL comprenant quatre stations de base comportant un émetteur chacune ;
La figure 8 représente la surface de couverture d'un système de positionnement selon l'invention comprenant quatre stations de bases ayant quatre émetteurs chacune, et utilisant la croisée des demi-droites ;
La figure 9 représente la surface de couverture d'un système de positionnement selon l'invention comprenant quatre stations de bases à quatre émetteurs chacune dans lequel la distance de l'appareil à une base est connue ou mesurée.

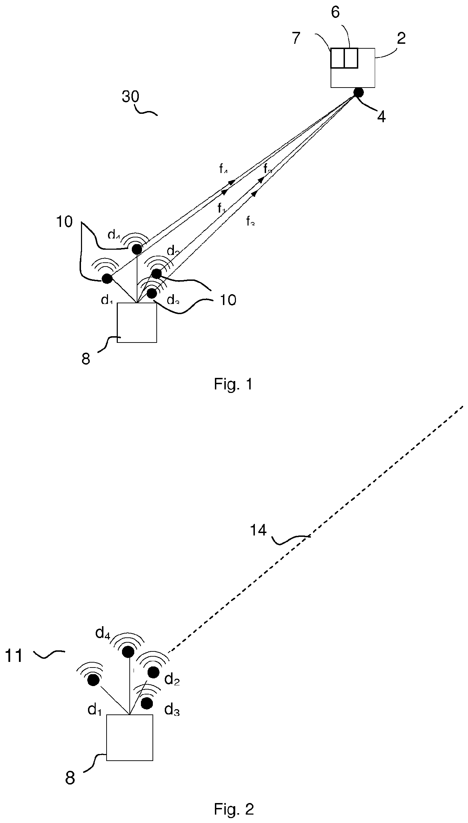

La figure 1 représente un système de positionnement 30 selon un premier mode de réalisation de la présente invention. Le système de positionnement 30 comprend des moyens d'émission acoustique disposées sur au moins une station de base 8 placée dans le milieu marin. Plus précisément, la station de base 8 comprend au moins deux et de préférence quatre émetteurs acoustiques (d₁, d₂, d₃, d₄) formant une antenne 11, les distances entre les émetteurs acoustiques (d₁, d₂, d₃, d₄) étant connues et lesdits émetteurs (d₁, d₂, d₃, d₄) émettant respectivement un signal acoustique (f₁, f₂, f₃, f₄) de manière synchronisée. Le système de positionnement 30 selon l'invention comprend des moyens de réception 3 équipant chacun des appareils 2 devant être positionnés, i.e. sur chacun des utilisateurs du système de positionnement, ainsi que des moyens de calculs 6 et de mémorisation 7.

Du côté utilisateur, les moyens de réception de l'appareil à positionner 2 du système de positionnement de l'invention comportent au moins un récepteur acoustique 4 comprenant un hydrophone. Le récepteur acoustique 4 du système de l'invention est généralement connecté à une électronique permettant son fonctionnement. Le récepteur acoustique 4 permet en particulier de mesurer précisément les différences de temps d'arrivés entre les signaux acoustiques (f₁, f₂, f₃, f₄) émis par les différents émetteurs (d₁, d₂, d₃, d₄) de la station de base 8 et également de mesurer les différences de phases de ces signaux (f₁, f₂, f₃, f₄) les uns par rapport aux autres.

Selon un mode de réalisation particulier de l'invention, chacun des appareils 2 devant être positionné comporte ses propres moyens de calculs 6 et de mémorisation 7. L'unité de mémorisation 7 stocke la valeur de différentes variables ou paramètres ainsi que des instructions de différents programmes aptes à être exécutées par l'unité de calcul 6. Dans le mode de réalisation préféré, parmi les différents programmes mémorisés, il existe un programme permettant une mise en oeuvre du système de positionnement 30 selon l'invention pour la détermination de la position de l'appareil sous-marin 2 particulier sur lequel lesdits moyens de réception 3 sont installés.

De manière optionnelle, les moyens de calculs 6 et de mémorisation 7 ne sont pas embarqués sur chacun des appareils 2 devant être positionnés et peuvent être déportés. Les informations issues de chacun des récepteurs acoustiques 4 embarqués sur les appareils 2 devant être positionnés sont transmises au(x) calculateur(s) 6 par tout moyen connu en temps réel ou en temps différé suivant les besoins.

Les moyens d'émission comportent une antenne 11 constituée d'une pluralité d'émetteurs acoustiques liés mécaniquement entre eux et synchronisés précisément. Selon le mode de réalisation préféré, l'antenne 11 comporte quatre émetteurs acoustiques (d₁, d₂, d₃, d₄) distants de 1m et non coplanaires. L'antenne 11 est équipée de l'électronique nécessaire pour la génération par chacun des émetteurs (d₁, d₂, d₃, d₄) d'une onde acoustique individuelle respectivement (f₁, f₂, f₃, f₄). L'électronique est conçue de telle façon que les ondes émises par les différents émetteurs puissent être synchronisées de l'ordre de la centaine de nanosecondes.

Selon un mode de réalisation particulier, les moyens d'émission sont fixés sur le fond sous-marin. La position absolue de l'antenne d'émission 11 est connue à mieux que 1 m par chacun des calculateurs 6 embarqués sur les véhicules à positionner 2. L'orientation absolue de l'antenne d'émission dans l'espace est connue à mieux que 0.1 degré par chacun des calculateurs 6 embarqués sur les véhicules à positionner 2.

De manière optionnelle, les moyens d'émission sont fixés sur un mobile de surface, la position et l'orientation de l'antenne d'émission 11 au cours du temps sont mesurées à l'aide de moyens connus (par exemple un système de positionnement GPS et un système inertiel fournissant le cap, roulis, tangage) et ensuite transmis au(x) calculateur(s) par tout moyen connu.

Le fonctionnement du système de positionnement 30 dont les éléments constitutifs viennent d'être décrits va maintenant être détaillé.

Dans le mode de réalisation représenté figure 1, les émetteurs (d₁, d₂, d₃, d₄) des moyens d'émissions émettent périodiquement, par exemple toutes les 10 secondes, chacun une onde acoustique individuelle (f₁, f₂, f₃, f₄). Ces quatre ondes individuelles sont émises de façon simultanée, chacune dans une bande de fréquence propre caractéristique. Par exemple le premier émetteur d₁ émet une onde f₁ dans la bande 16kHz-18kHz, le second émetteur d₂ émet une onde f₂ dans la bande 18kHz-20kHz, le troisième émetteur d₃ émet une onde f₃ dans la bande 20kHz-22kHz, le quatrième émetteur d₄ émet une onde f₄ dans la bande 22kHz-24kHz.

De manière optionnelle, les ondes émises par chacun des émetteurs sont identiques mais décalées temporellement d'un décalage connu et supérieur à la durée du signal émis par chaque transducteur. Par exemple la durée des signaux est de 5 ms, le second émetteur émet 10 ms après le premier, le troisième émet 10 ms après le second et le quatrième émet 10 ms après le troisième. Les décalages temporels ainsi prescrits permettent de distinguer les ondes issues des différents émetteurs. Ils sont par ailleurs compensés lors du calcul de position.

De manière optionnelle, les ondes émises par chacun des émetteurs occupent la même bande de fréquence mais sont conçues pour pouvoir être différentiées les unes des autres par exemple par l'utilisation de codes pseudo-orthogonaux.

Les ondes acoustiques émises par chacun des émetteurs acoustiques individuels se propagent dans le milieu marin. Ainsi, tout appareil sous-marin présent dans la zone utile peut capter les ondes acoustiques de positionnement.

Le moyen de réception d'un appareil sous-marin 2 particulier qui cherche à déterminer sa position est en état de veille et écoute les sons se propageant dans son environnement. Les ondes (f₁, f₂, f₃, f₄) reçues par le récepteur 4 dans la bande de fréquence d'intérêt sont transformées en un signal dépendant du temps qui peut ensuite être traité par l'électronique des moyens de réception.

La première étape du traitement du signal consiste à détecter la différence entre les temps d'arrivée des signaux émis respectivement par les émetteurs des moyens d'émission pris deux par deux et à attribuer à chaque paire d'émetteurs une différence de temps d'arrivée correspondante. Ceci est rendu possible du fait que ces ondes ont été produites de façon à pouvoir être différentiées les unes par rapport aux autres.

La seconde étape du traitement du signal électrique consiste à mesurer les différences de phase, au moment de leur arrivée sur le détecteur acoustique, entre les signaux émis respectivement par chaque paire d'émetteurs des moyens d'émission.

Les différences de temps d'arrivée et les différences de phases d'arrivée des signaux émis par chaque paire d'émetteurs des moyens d'émission et reçus par les moyens de réception sont ensuite transmises aux moyens de calcul 6.

La première étape du calcul consiste à calculer à partir des différences de temps d'arrivée et des différences de phases d'arrivée les différences de temps précises des signaux émis pour chaque paire d'émetteurs (dᵢ, dⱼ) des moyens d'émission et reçus par les moyens de réception.

De manière optionnelle, et par exemple dans le cas où les différents émetteurs sont distants les uns des autres de moins d'une demi longueur d'onde, le calculateur calcule les différences de temps précises des signaux émis par chacun des émetteurs des moyens d'émission et reçus par les moyens de réception en utilisant uniquement les différences de phases.

La seconde étape du calcul consiste à calculer, à partir des différences de temps précises des signaux émis par chacun des émetteurs des moyens d'émission et reçus par les moyens de réception, les lieux géométriques possibles 14 de la position relative du récepteur acoustique 4 embarqué sur l'appareil à positionner 2 par rapport à l'antenne 11 de la station de base 8.

Selon un mode de réalisation particulier, le calcul de la position relative du récepteur acoustique 4 embarqué sur l'appareil à positionner 2 par rapport à l'antenne 11 de la station de base 8 est approché, dans un repère orienté lié à l'antenne des moyens d'émission, par une demi droite issue de l'antenne des moyens d'émissions et contenant la position du récepteur embarqué sur l'appareil à positionner.

Selon un mode de réalisation particulier, les moyens d'émissions comportent deux émetteurs 10 formant une antenne 11. Dans ce cas la seconde étape de calcul permet d'obtenir des informations partielles sur la position relative de l'appareil à positionner 2 par rapport à l'antenne 11 de la station de base 8. Par exemple si l'antenne 11 comporte deux émetteurs (d₁, d₂), le calcul permet à partir des différences de temps précises des signaux émis par chacun des émetteurs (d₁, d₂) des moyens d'émission 9 et reçus par les moyens de réception 3 de déterminer, dans un repère orienté lié à l'antenne 11 des moyens d'émission, le lieu géométrique possible 14 de la position du récepteur 4 embarqué sur le véhicule à positionner 2 comme étant un hyperboloïde dans l'espace. Cet hyperboloïde est défini par la position des émetteurs et par la mesure de la différence de temps d'arrivée et de la différence des phases d'arrivée des signaux acoustiques provenant des deux émetteurs (d₁, d₂). Plus précisément, l'axe de cet hyperboloïde est un axe passant par les positions des deux émetteurs (d₁, d₂), ces émetteurs correspondant aux foyers de l'hyperboloïde. Le signe de la différence de temps d'arrivée précise entre les deux signaux acoustiques reçus permet d'identifier la nappe de l'hyperboloïde sur laquelle est situé le récepteur de l'appareil à positionner, et d'éliminer l'autre nappe de l'hyperboloïde.

Selon un autre mode de réalisation particulier, les moyens d'émissions comportent trois émetteurs 10 disposés géométriquement de façon non colinéaire et formant une antenne 11. En procédant de la même manière que ci-dessus, la seconde étape de calcul permet d'obtenir des informations plus précises sur la position relative du récepteur embarqué sur le véhicule sous-marin par rapport à l'antenne des moyens d'émissions. Par exemple, si l'antenne 11 comporte trois émetteurs (d₁, d₂, d₃), le calcul permet à partir des différences de temps d'arrivée et des différences de phase d'arrivée des signaux émis par les paires d'émetteurs (d₁, d₂) et (d₁, d₃) des moyens d'émission 9 et reçus par le récepteur acoustique 4 de déterminer, dans un repère orienté lié à l'antenne des moyens d'émission, le lieu géométrique possible 14 de la position du récepteur 4 embarqué sur le véhicule à positionner 2 comme étant l'intersection de deux hyperboloïdes correspondant respectivement à une paire d'émetteurs (d₁, d₂) et (d₁, d₃). Chaque hyperboloïde est défini par la position des émetteurs et par la mesure de la différence de temps d'arrivée précise des signaux acoustiques entre ces deux émetteurs. Le lieu géométrique possible de position relative du récepteur 4 par rapport à la station de base 8 est alors situé à l'intersection des deux hyperboloïdes. Lorsque la distance relative entre l'appareil à positionner 2 et l'antenne 11 des moyens d'émission 9 est grande, l'intersection entre les deux hyperboloïdes peut être approximée par deux demi-droites.

La figure 2 représente un mode de réalisation préféré, dans lequel les moyens d'émissions 9 comportent quatre émetteurs 10 dont les positions géométriques ne sont pas contenues dans un même plan et qui forment une antenne 11. En procédant de la même manière que ci-dessus, la seconde étape de calcul permet d'obtenir des informations permettant à l'incertitude près de définir la position relative de l'antenne des moyens d'émissions et le récepteur embarqué sur le véhicule sous-marin. Par exemple si l'antenne 11 comporte quatre émetteurs (d₁, d₂, d₃, d₄), le calcul permet à partir des différences de temps précises des signaux émis respectivement par les différentes paires d'émetteurs des moyens d'émission 9 et reçus par les moyens de réception 3 de déterminer, dans un repère orienté lié à l'antenne des moyens d'émission, le lieu géométrique possible 14 de la position du récepteur 4 embarqué sur le véhicule à positionner 2 comme étant l'intersection d'hyperboloïdes, par exemple de trois hyperboloïdes correspondant respectivement aux paires d'émetteurs (d₁, d₂), (d₁, d₃) et (d₁, d₄). Chaque hyperboloïde est défini par la position des émetteurs et par la mesure de la différence de temps d'arrivée précise des signaux acoustiques entre ces deux émetteurs. Le lieu géométrique possible de position relative du récepteur 4 par rapport à la station de base 8 est alors situé à l'intersection de ces hyperboloïdes. Lorsque la distance relative entre l'appareil à positionner 2 et l'antenne 11 des moyens d'émission 9 est faible, l'intersection entre ces hyperboloïdes peut être approximée par un point. Lorsque la distance relative entre l'appareil à positionner 2 et l'antenne 11 des moyens d'émission 9 est grande, l'intersection entre ces hyperboloïdes peut être approximée par une demi-droite.

Selon un mode de réalisation particulier, le système de l'invention comporte des moyens pour calculer à partir de la direction relative entre l'antenne des moyens d'émissions et le récepteur embarqué sur le véhicule sous-marin et à partir de l'orientation, dans un repère orienté de référence, de l'antenne des moyens d'émissions, la direction absolue, dans un repère orienté de référence, entre l'antenne des moyens d'émissions et le récepteur embarqué sur le véhicule sous-marin.

De manière optionnelle, les moyens d'émission 9 et les moyens de réceptions 3 sont munis d'horloges synchronisées. L'horloge des moyens d'émission 9 est utilisée pour déclencher l'émission des signaux acoustiques et l'horloge des moyens de réception 3 étant synchronisé avec l'horloge d'émission, le temps de propagation de l'onde acoustique entre chaque émetteur 10 de l'antenne d'émission et le récepteur 4 embarqué sur le véhicule à positionner 2 peut être estimé par différence entre le temps de réception et le temps connu d'émission. Par exemple dans des conditions standard une synchronisation à mieux que 1 ms permet d'obtenir une erreur de distance inférieure à 1.5 m. A partir de ce temps de propagation, on peut déduire, en utilisant la vitesse de propagation du son dans l'eau (ou célérité), la distance séparant l'antenne des moyens d'émission du récepteur des moyens de réception.

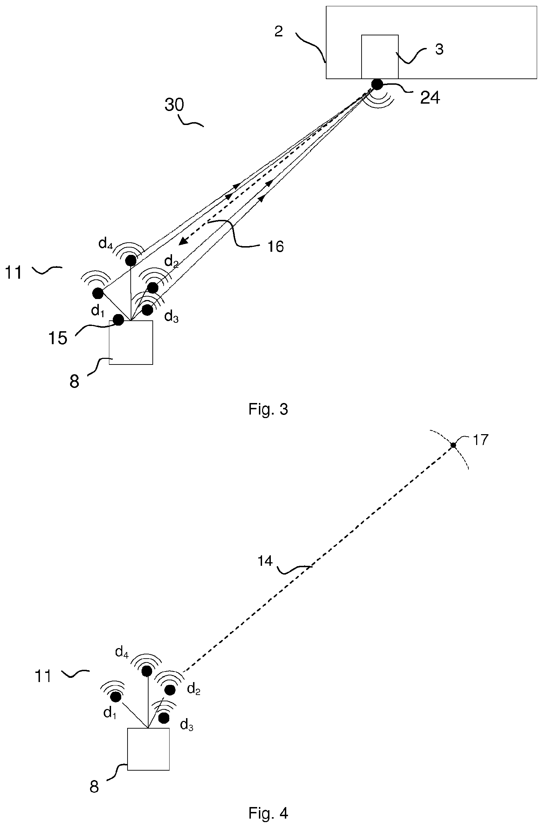

Selon un mode de réalisation représenté figure 3, les moyens d'émission 9 sont complétés par un récepteur acoustique 15 et les moyens de réception 3 par un émetteur acoustique 24. Les moyens d'émission 9 n'émettent pas de façon autonome mais en réponse à un signal acoustique 16 de commande émis par l'émetteur 24 embarqué sur le véhicule à positionner 2. Du temps séparant l'émission de la commande 16 de la réception du signal de réponse, on déduit le temps de propagation de l'onde acoustique entre un émetteur 24 embarqué à bord de l'appareil sous-marin à positionner et un récepteur 15 fixé sur la station de base 8. A partir de ce temps de propagation, on déduit, en utilisant la vitesse de propagation du son dans l'eau, la distance séparant l'antenne 11 des moyens d'émission du récepteur 4 des moyens de réception.

La figure 4 illustre la détermination de la position 17 relative de l'appareil à positionner par rapport à une station de base 8 à l'intersection d'une demi-droite 14 et d'une sphère dont le rayon est égal à la distance mesurée entre la station de base 8 et l'appareil.

Selon un mode de réalisation particulier, le système de positionnement possède des moyens de connaître la différence d'immersion entre le système de positionnement et la station de base, par exemple par connaissance de l'immersion de la balise et de l'immersion du système de positionnement grâce à un capteur d'immersion, ou par connaissance de l'altitude de la balise et de l'altitude du système de positionnement grâce à un altimètre dans le cas où la variation de la topographie du fond est connue. Pour un système de positionnement à une immersion différente de la station de base, cette connaissance de la différence d'immersion permet de situer le lieu géométrique possible 14 dans un plan horizontal. Une station de base à trois émetteurs dans un plan horizontal ou à quatre émetteurs permet de positionner l'appareil dans la mesure où le lieu géométrique possible 14 est l'intersection d'une demi-droite non horizontale avec un plan, à savoir un point.

La position 17 de l'appareil sous-marin établie dans les étapes de calculs décrites ci-dessus est une position relative de l'appareil sous-marin 2 par rapport à un repère orienté lié à l'antenne 11 des moyens d'émission 9. Si l'on souhaite calculer la position du récepteur 4 embarqué sur l'appareil sous-marin à positionner par rapport à un repère orienté de référence, il est nécessaire de connaître précisément la position et l'orientation de l'antenne 11 des moyens d'émissions 9 par rapport à ce repère orienté de référence. Dans le cas où cette antenne 11 est fixe, comme proposé dans un mode de réalisation particulier, il est possible d'estimer précisément ces valeurs par un calibrage préalable. Une méthode simple permettant de réaliser ce calibrage est de mettre en oeuvre le système en utilisant un appareil sous-marin dont la position est connue précisément. Par exemple cet appareil peut être fixé au bout d'une perche sur le coté d'un bateau et être positionné grâce à un système GPS. A partir des mesures acoustiques reçues et en utilisant des étapes de calcul similaires aux étapes décrites dans le mode de réalisation proposé, il est facile de trouver, par exemple par la méthode des moindres carrés, la valeur des paramètres de position et d'orientation des moyens d'émissions permettant d'obtenir l'erreur la plus faible possible sur la position de l'appareil. Ces paramètres peuvent ensuite être pris comme donnée d'entrée du système de positionnement étant donné que par hypothèse la position et l'orientation des moyens d'émission sont fixes.

Selon un mode de réalisation particulier, le système de l'invention comporte des moyens de mesure du déplacement relatif de l'appareil 2 par rapport à la station de base 8 entre la réception de deux ensembles de signaux acoustiques. Le calculateur 6 détermine la position 17 de l'appareil 2 en comparant ce déplacement aux couples de lieux géométriques possibles définis à la réception de ces deux signaux acoustiques.

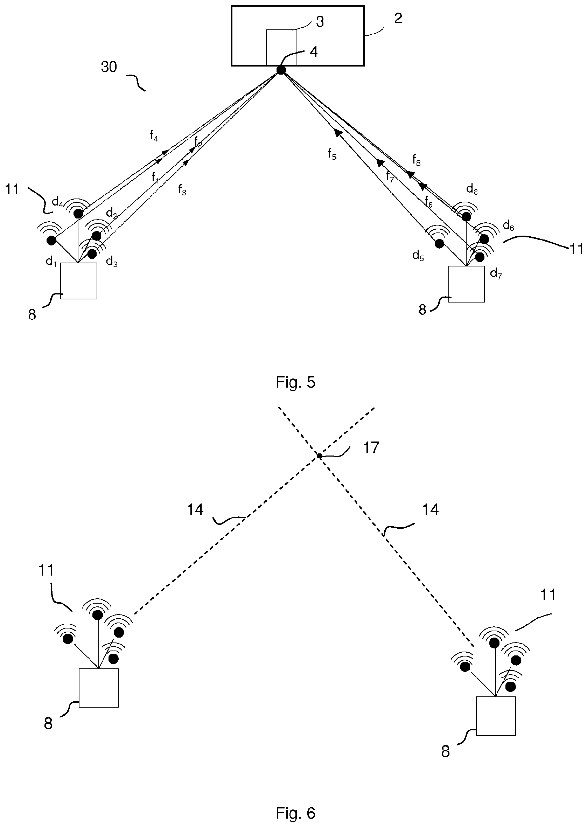

Selon un mode de réalisation particulier, représenté figures 5 et 6, le système de l'invention comporte au moins deux stations de base 8 non synchronisées entre elles. Le calculateur 6 détermine la position 17 de l'appareil 2 par intersection des différents lieux géométriques possibles 14 relatifs à chacune des stations de base 8. Pour des stations de base à quatre émetteurs, la position de l'appareil est déterminée comme étant l'intersection de deux demi-droites.

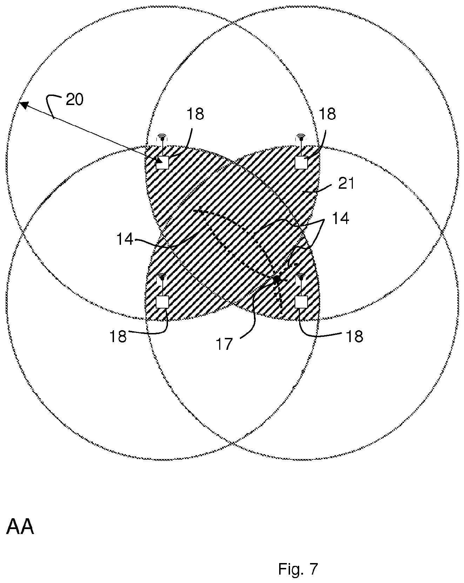

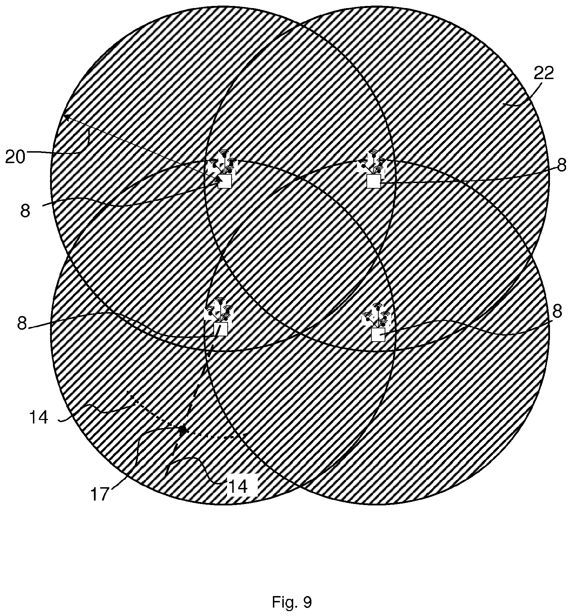

La figure 7 représente la surface de couverture 21 (zone hachurée) d'un système de positionnement de type LBL selon l'état de la technique. Ce système de positionnement comprend quatre stations de base 18, comportant un émetteur chacune. Le système permet classiquement de déterminer la position 17 d'un appareil situé à l'intérieur d'un volume situé dans la portée d'au moins trois stations de base 18 mono-émetteur, la portée de chaque émetteur étant définie par le volume d'une sphère, dont le rayon 20 est égal à la portée maximale de l'émetteur. La projection dans un plan du volume à l'intersection de trois sphères est représentée figure 9 par une zone hachurée 21 correspondant à l'intersection des cercles de portée d'au moins trois balises. Cette surface de couverture 21 est considérablement plus faible que la portée 20 de chacun des émetteurs.

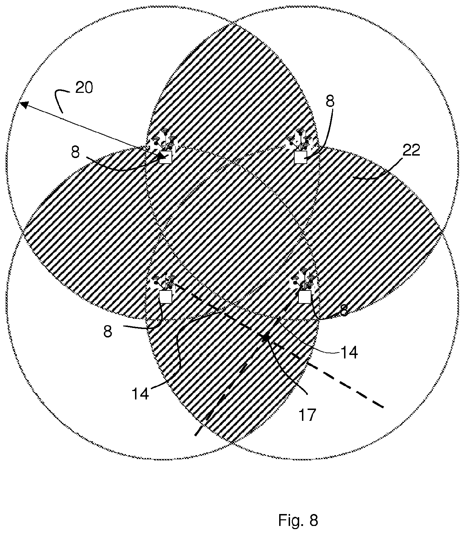

La figure 8 représente la surface de couverture 22 d'un système de positionnement selon un mode de réalisation de l'invention. Le système de positionnement 30 comporte quatre stations de base 8, comprenant chacune quatre émetteurs. Le système permet de déterminer la position 17 d'un appareil par rapport aux lieux géométriques relatifs aux deux stations de base multi-émetteurs 8 les plus proches. La surface de couverture 22 (zone hachurée) délimitée par l'intersection d'au moins deux cercles correspondant à la portée maximale de deux balises est considérablement agrandie par rapport à celle de la figure 7. Par ailleurs, ce système de positionnement permet le positionnement simultané d'un très grand nombre d'appareils sous-marins ou de surface, et il permet leur discrétion dans la mesure où il n'est pas possible par un tiers de détecter ces appareils sous-marins à positionner, puisque ceux-ci n'émettent aucun signal acoustique.

La figure 9 représente la surface de couverture 22 d'un système de positionnement selon un autre mode de réalisation de l'invention. Le système de positionnement 30 comporte quatre stations de base 8, comprenant chacune quatre émetteurs et comporte un moyen pour connaître la distance entre l'appareil à positionner et une station de base 8. Le système permet de déterminer la position 17 d'un appareil par l'intersection de la sphère de distance et du lieu géométrique possible relatifs à au moins une station de base multi-émetteurs 8. La surface de couverture 22 (zone hachurée) du système délimitée sur la figure 9 est encore considérablement agrandie et recouvre totalement la portée maximum des émetteurs des stations de base 8.

Ainsi, le système de positionnement de l'invention permet à un grand nombre d'utilisateurs munis de moyens de détection acoustique et de moyens de calcul de se positionner par rapport à une seule antenne émettrice.

Il apparaît aussi de manière évidente que les utilisateurs n'émettant pas de signaux acoustiques ne peuvent pas être détectés facilement par des moyens acoustiques. Le système de positionnement de l'invention permet de déterminer de manière discrète la position d'un appareil sous-marin muni de moyens de réception acoustique.

Le système est aisé à déployer puisqu'il ne nécessite au minimum que l'installation d'une seule base sur le fond sous-marin et non pas d'une pluralité de base comme les systèmes antérieurs.

Les moyens de réception placés sur l'appareil sous-marin à positionner sont d'un coût restreint puisqu'ils ne comportent que des composants simples, couramment commercialisés.

De plus, les moyens de réception consomment peu d'énergie et sont de petite taille puisqu'ils ne fonctionnent pas en émission et donc ne nécessitent pas de générer une puissance électrique importante afin d'émettre une onde acoustique.

Les moyens d'émissions placés sur l'antenne d'émission sont d'un coût restreint puisqu'ils ne comportent que des composants simples, couramment commercialisés et en particulier puisqu'il n'est pas nécessaire de disposer en temps réel d'un référencement en cap, roulis, tangage précis.

La précision du système de positionnement selon l'invention est essentiellement donnée par la taille de l'antenne émettrice pour une bande de fréquence de fonctionnement donnée. Par exemple, avec une antenne de 1 m de côté opérant autour de 20 kHz, une précision de positionnement de l'ordre du mètre peut être obtenue à une distance de 1 Km, avec une portée de 4 km environ.

Le système de positionnement de l'invention ne requiert pas l'utilisation des balises émettrices sur les appareils sous-marins à positionner. L'invention permet d'utiliser un nombre fixe et réduit d'émetteurs acoustiques quel que soit le nombre d'appareils sous-marin ou de surface à positionner. L'invention permet donc de positionner un nombre arbitraire d'appareils sous-marins sur une même zone.

L'invention permet ainsi de positionner des appareils sous-marins dont la présence ne doit pas pouvoir être détectée par d'autres appareils acoustiques.

Les appareils sous-marins à positionner n'utilisant pas nécessairement de balises émettrices, l'invention permet de réduire la consommation électrique sur chacun des appareils sous-marins à positionner.

Avantageusement, en ne nécessitant pas forcément de déployer plusieurs systèmes de référence mais un seul, l'invention permet un déploiement rapide du système de positionnement.

Avantageusement du fait qu'il n'y a pas besoin de connaître en temps réel l'orientation dans l'espace de l'appareil sous marin ou de surface à positionner, l'invention permet de réduire l'utilisation de systèmes complexes de mesure de l'orientation et donc l'invention permet de positionner un appareil sous-marin pour un coût faible.

Avantageusement, en déployant un réseau de systèmes de référence pour couvrir une zone étendue dans un mode de réalisation où la distance entre l'appareil et une station de référence donnée est mesurée ou estimée, du fait qu'il n'est alors pas nécessaire que chaque point de la zone soit couvert par plusieurs systèmes de référence mais uniquement par un seul, l'invention permet de couvrir une zone très étendue avec un nombre très réduit de stations de référence, ce qui réduit énormément le travail et le temps de déploiement, et réduit par ailleurs fortement les coûts.

Avantageusement, en permettant au récepteur de se positionner sans émettre bien que n'étant en visibilité que de deux stations par croisement de deux demi-droites, l'invention permet de ne déployer qu'un minimum de deux stations pour un système de positionnement multi-utilisateur et discret, ou permet d'augmenter la zone couverte en tirant parti de toutes les zones couvertes par deux stations de référence.

Avantageusement, en permettant au récepteur de se positionner en étant en visibilité de deux stations par croisement de deux demi-droites, l'invention permet d'éviter de devoir synchroniser les différentes bases entre elles.

Avantageusement, en permettant au récepteur de se positionner par croisement de deux demi-droites, dont la projection dans le plan horizontal local définissant la longitude et la latitude est indépendante des variations de la célérité du son dans la colonne d'eau, l'invention permet de ne pas dépendre des variations de la célérité - lesquelles sont particulièrement importantes et changeantes près de la surface, et évite ainsi à l'utilisateur d'acquérir régulièrement le profil de célérité.

Avantageusement, en permettant au récepteur de se positionner bien que n'étant en visibilité que d'une seule station de base par croisement d'une demi-droite et d'une sphère lorsque la distance à la station peut être estimée ou mesurée, l'invention permet de couvrir une très grande zone avec un nombre très réduit de stations à déployer, en tirant partie de toute zone couverte même par une seule station de référence.

Avantageusement, en permettant de n'avoir qu'un seul récepteur sur l'appareil à positionner, l'invention permet d'avoir un système de positionnement faible coût, omnidirectionnel et ayant un impact faible ou nul sur l'hydrodynamique de l'appareil.

Bien que l'invention ait été décrite en référence à un mode de réalisation particulier, elle n'est nullement limitée à ce mode de réalisation. Elle comprend tous les équivalents techniques des moyens décrits ainsi que leurs combinaisons qui entrent dans le cadre de l'invention, telle que définie par les revendications.

## Revendications

1. Système de positionnement (30) d'au moins un appareil sous-marin (2), ledit appareil sous-marin (2) comportant :
- un récepteur acoustique (4) comprenant un hydrophone, et
- un calculateur (6), ledit système comprenant ledit récepteur acoustique (4), ledit calculateur (6) et :
- au moins deux stations de base (8) disposées dans le milieu marin, chaque station de base (8), comportant au moins deux émetteurs acoustiques (10) formant une antenne (11), les distances entre les émetteurs acoustiques (10) de chaque antenne (11) étant connues, lesdits émetteurs (10) d'une même station de base étant synchronisés entre eux,
- les deux stations de base (8) étant non synchronisées entre elles,
- chaque station de base étant configurée pour émettre par chacun de ses émetteurs (10) un signal acoustique qui est reçu par le récepteur acoustique (4), le calculateur (6) comportant des moyens de calcul des différences de temps d'arrivée et de différences de phases des signaux acoustiques provenant des émetteurs d'une même station de base (8), des moyens de calcul des lieux géométriques possibles (14) de la position relative de l'appareil (2) par rapport à chacune desdites stations de base (8) et à leur orientation respective, et des moyens de détermination de la position (17) de l'appareil sous-marin à partir de ces lieux géométriques possibles (14).

2. Système selon la revendication 1, **caractérisé en ce qu'**au moins une station de base (8) ne comporte que deux émetteurs (10), le lieu géométrique possible (14) de la position relative de l'appareil par rapport à ladite station de base (8) étant, à l'incertitude près, un hyperboloïde dont l'axe est la droite contenant les deux émetteurs (10).

3. Système selon la revendication 1, **caractérisé en ce qu'**au moins une station de base (8) comporte trois émetteurs (10) disposés géométriquement de façon non co-linéaire, le lieu géométrique possible (14) de la position relative de l'appareil (2) par rapport à la station de base (8) étant, à l'incertitude près, l'intersection de deux hyperboloïdes qui est considérée, à grande distance relative, comme étant deux demi-droites.

4. Système selon la revendication 1, **caractérisé en ce qu'**au moins une station de base (8) comporte quatre émetteurs (10) dont les positions ne sont pas contenues par un même plan, le lieu géométrique possible (14) de la position relative de l'appareil (2) par rapport à la station de base (8) étant, à l'incertitude près, l'intersection de trois hyperboloïdes qui peut, à faible distance relative, être approximée par un point ou, à grande distance, par une demi-droite.

5. Système selon l'une quelconque des revendications 1 à 4, **caractérisé en ce que** le système comporte des moyens pour acquérir la distance séparant l'appareil (2) d'au moins une station de base (8) et permettant de localiser la position relative du système par rapport à cette station de base (8) sur une sphère.

6. Système selon la revendication 5, **caractérisé en ce que** la position et l'orientation absolues de l'antenne (11) d'au moins une station de base (8) sont connues ou estimées par tout moyen connu.

7. Système selon la revendication 5 ou 6, **caractérisé en ce que** les moyens pour acquérir la distance séparant l'appareil (2) d'une station de base (8) comportent un émetteur acoustique (24) et **en ce que** la station de base comporte un récepteur acoustique (15) adapté audit émetteur, l'émission de la station de base (8) étant déclenchée par une commande acoustique comportant un ordre d'interrogation envoyé par l'appareil (2).

8. Système selon l'une des revendications 1 à 7, **caractérisé en ce que** l'appareil (2) et une station de base (8) comportent chacun une horloge, lesdites horloges étant synchronisées entre elles et permettant la mesure du temps de trajet du signal acoustique entre ladite station de base (8) et l'appareil (2).

9. Système selon la revendication 8, **caractérisé en ce que** les horloges sont resynchronisables par l'émission d'un signal d'interrogation émis par l'appareil sous-marin (2).

10. Système selon l'une des revendications 1 à 9, **caractérisé en ce que** le déplacement relatif de l'appareil (2) par rapport à la station de base (8) entre la réception de deux ensembles de signaux acoustiques est connu ou mesuré, et **en ce que** le calculateur détermine la position de l'appareil en comparant ce déplacement aux couples de lieux géométriques possibles (14) définis à la réception de ces deux ensembles de signaux acoustiques.

11. Système selon l'une quelconque des revendications précédentes, **caractérisé en ce que** le calculateur comporte des moyens pour tenir compte de la célérité ou du profil de célérité du son dans le milieu marin.

12. Système selon l'une quelconque des revendications précédentes, **caractérisé en ce qu'**il comprend quatre stations de base (8), chaque station de base étant située dans la portée d'au moins deux stations de base (8).

## Patentansprüche

1. System (30) zum Positionieren wenigstens eines Unterwassergeräts (2), wobei das Unterwassergerät (2)
- einen akustischen Empfänger (4) mit einem Hydrophon und
- einen Rechner (6)
aufweist,
wobei das System den akustischen Empfänger (4), den Rechner (6)
und
- wenigstens zwei Basisstationen (8), die im Unterwasserbereich angeordnet sind, aufweist, wobei jede Basisstation (8) wenigstens zwei eine Antenne (11) bildende akustische Sender (10) aufweist, wobei die Abstände zwischen den akustischen Sendern (10) jeder Antenne (11) bekannt sind, wobei die Sender (10) einer selben Basisstation untereinander synchronisiert sind,
- wobei die beiden Basisstationen (8) nicht miteinander synchronisiert sind,
- wobei jede Basisstation dazu ausgelegt ist, mit jedem ihrer Sender (10) ein akustisches Signal auszusenden, das vom akustischen Empfänger (4) empfangen wird, wobei der Rechner (6) Mittel zum Berechnen der Unterschiede zwischen den Ankunftszeiten und der Unterschiede zwischen den Phasen der von den Sendern einer selben Basisstation (8) kommenden akustischen Signale, Mittel zum Berechnen der möglichen geometrischen Orte (14) der relativen Position des Geräts (2) gegenüber jeder der Basisstationen (8) und in Bezug auf deren jeweilige Orientierung, sowie Mittel zum Bestimmen der Position (17) des Unterwassergeräts von diesen möglichen geometrischen Orten (14) aus aufweist.

2. System gemäß Anspruch 1, **dadurch gekennzeichnet, daß** wenigstens eine Basisstation (8) nur zwei Sender (10) aufweist, wobei der mögliche geometrische Ort (14) der relativen Position des Geräts gegenüber der Basisstation (8), bis auf die Unsicherheit, ein Hyperboloid ist, dessen Achse die Gerade ist, auf der die beiden Sender (10) liegen.

3. System gemäß Anspruch 1, **dadurch gekennzeichnet, daß** wenigstens eine Basisstation (8) drei Sender (10) aufweist, die geometrisch nicht kolinear angeordnet sind, wobei der mögliche geometrische Ort (14) der relativen Position des Geräts (2) gegenüber der Basisstation (8), bis auf die Unsicherheit, der Schnitt zweier Hyperboloide ist, der auf relativ große Entfernung als zwei Halbgeraden betrachtet wird.

4. System gemäß Anspruch 1, **dadurch gekennzeichnet, daß** wenigstens eine Basisstation (8) vier Sender (10) aufweist, deren Positionen nicht in einer selben Ebene liegen, wobei der mögliche geometrische Ort (14) der relativen Position des Geräts (2) gegenüber der Basisstation (8), bis auf die Unsicherheit, der Schnitt dreier Hyperboloide ist, der auf eine relativ geringe Entfernung durch einen Punkt oder auf große Entfernung durch eine Halbgerade angenähert werden kann.

5. System gemäß einem der Ansprüche 1 bis 4, **dadurch gekennzeichnet, daß** das System Mittel zum Erfassen des Abstands zwischen dem Gerät (2) und wenigstens einer Basisstation (8) aufweist, die ermöglichen, die relative Position des Systems gegenüber dieser Basisstation (8) auf einer Kugel zu lokalisieren.

6. System gemäß Anspruch 5, **dadurch gekennzeichnet, daß** die absolute Position und die absolute Orientierung der Antenne (11) wenigstens einer Basisstation (8) durch jegliches bekannte Mittel bekannt oder abgeschätzt sind.

7. System gemäß Anspruch 5 oder 6, **dadurch gekennzeichnet, daß** die Mittel zum Erfassen des Abstands zwischen dem Gerät (2) und einer Basisstation (8) einen akustischen Sender (24) aufweisen und daß die Basisstation einen an den besagten Sender angepaßten akustischen Empfänger (15) aufweist, wobei das Aussenden der Basisstation (8) durch einen akustischen Befehl ausgelöst wird, der einen vom Gerät (2) ausgesandten Abfragebefehl aufweist.

8. System gemäß einem der Ansprüche 1 bis 7, **dadurch gekennzeichnet, daß** das Gerät (2) und eine Basisstation (8) jeweils eine Uhr aufweisen, wobei die Uhren miteinander synchronisiert sind und die Messung der Laufzeit des akustischen Signals zwischen der Basisstation (8) und dem Gerät (2) ermöglichen.

9. System gemäß Anspruch 8, **dadurch gekennzeichnet, daß** die Uhren durch das Aussenden eines vom Unterwassergerät (2) ausgesandten Abfragesignals erneut synchronisiert werden können.

10. System gemäß einem der Ansprüche 1 bis 9, **dadurch gekennzeichnet, daß** die relative Verlagerung des Geräts (2) gegenüber der Basisstation (8) zwischen dem Empfang zweier Gesamtheiten akustischer Signale bekannt oder gemessen ist und daß der Rechner die Position des Geräts bestimmt, indem er diese Verlagerung mit den Paaren der möglichen geometrischen Orte (14), die beim Empfang der beiden Gesamtheiten akustischer Signale definiert worden sind, vergleicht.

11. System gemäß einem der vorangehenden Ansprüche, **dadurch gekennzeichnet, daß** der Rechner Mittel aufweist, die die Fortpflanzungsgeschwindigkeit oder das Fortpflanzungsgeschwindigkeitsprofil des Schalls im Unterwasserbereich berücksichtigen.

12. System gemäß einem der vorangehenden Ansprüche, **dadurch gekennzeichnet, daß** es vier Basisstationen (8) aufweist, wobei jede Basisstation in Reichweite wenigstens zweier Basisstationen (8) liegt.

## Claims

1. A positioning system (30) of at least one underwater apparatus (2), said underwater apparatus (2) comprising:
- an acoustic receiver (4) comprising a hydrophone, and
- a computer (6),
said system comprising said acoustic receiver (4), said computer (6) and :
- at least two base stations (8) placed in the sea environment, each base station (8) comprising at least two acoustic transmitters (10) forming an antenna (11), the distances between the acoustic transmitters (10) of each antenna (11) being known, said transmitters (10) of a same base station being synchronized with each other,
- the two base stations (8) being non-synchronised with each other,
- each base station being configured to transmit through each of its transmitters (10) an acoustic signal that is received by the acoustic receiver (4), the computer (6) comprising means for calculating arrival time differences and phase differences of acoustic signals coming from the transmitters of a same base station (8), means for calculating the possible geometric loci (14) of the relative position of the apparatus (2) with respect to each of said base stations (8) and to their respective orientation, and means for determining the position (17) of the underwater apparatus based on these possible geometric loci (14).

2. The system according to claim 1, **characterized in that** at least one base station (8) comprises only two transmitters (10), wherein the possible geometric locus (14) of the relative position of the apparatus with respect to said base station (8) is, within the uncertainty, a hyperboloid the axis of which is the line containing the two transmitters (10).

3. The system according to claim 1, **characterized in that** at least one base station (8) comprises three transmitters (10) in a non-colinear geometric arrangement, wherein the possible geometric locus (14) of the relative position of the apparatus (2) with respect to the base station (8) is, within the uncertainty, the intersection of two hyperboloids that is considered, at a great relative distance, as being two half-lines.

4. The system according to claim 1, **characterized in that** at least one base station (8) comprises four transmitters (10) whose positions are not contained in a same plane, wherein the possible geometric locus (14) of the relative position of the apparatus ()2 with respect to the base station (8) is, within the uncertainty, the intersection of three hyperboloids that can be approximated by a point at a small relative distance, or by a half-line at a great distance.

5. The system according to any one of claims 1 to 4, **characterized in that** the system comprises means for acquiring the distance separating the apparatus (2) from at least one base station (8) and permitting to localize the relative position of the system with respect to this base station (8) on a sphere.

6. The system according to claim 5, **characterized in that** the absolute position and orientation of the antenna (11) of at least one base station 8 are known or estimated by any known means.

7. The system according to claim 5 or 6, **characterized in that** the means for acquiring the distance separating the apparatus (2) from a base station (8) comprise an acoustic transmitter (24), and **in that** the base station comprises an acoustic receiver (15) adapted to said transmitter, wherein the transmission by the base station (8) is triggered by an acoustic control signal comprising a polling command sent by the apparatus (2).

8. The system according to one of claims 1 to 7, **characterized in that** the apparatus (2) and a base station (8) each comprise a clock, said clocks being synchronized to each other and permitting the measurement of the acoustic signal travel time between said base station (8) and the apparatus (2).

9. The system according to claim 8, **characterized in that** the clocks can be resynchronized by the transmission of a polling signal transmitted by the underwater apparatus (2).

10. The system according to one of claims 1 to 9, **characterized in that** the relative displacement of the apparatus (2) with respect to the base station (8) between the receptions of two sets of acoustic signals is known or measured, and **in that** the computer determines the position of the apparatus by comparing this displacement with couples of possible geometric loci (14) defined at the reception of these two sets of acoustic signals.

11. The system according to any one of the preceding claims, **characterized in that** the computer comprises means for taking into account the sound velocity or velocity profile in the sea environment.

12. The system according to any one of the preceding claims, **characterized in that** it comprises four base stations (8), each base station being located within the range of at least two base stations (8).
